# FASCICULE DE BREVET EUROPEEN

(11) **EP 3 676 234 B1**
(45) Date de publication et mention de la délivrance du brevet: **07.07.2021**
(21) Numéro de dépôt: 18800714.0
(22) Date de dépôt: 22.10.2018
(51) Int. Cl.: C04B 35/111, C01F 7/00, C01F 17/00, C04B 35/115, C04B 35/505

(54) **PROCEDE DE PREPARATION D'UNE POUDRE A BASE D'OXYDE(S) D'YTTRIUM, D'ALUMINIUM ET EVENTUELLEMENT D'AU MOINS UN AUTRE ELEMENT**
VERFAHREN ZUR HERSTELLUNG EINES PULVERS AUF BASIS VON OXID(EN) VON YTTRIUM, VON ALUMINIUM UND GEGEBENENFALLS VON MINDESTENS EINEM ANDEREN ELEMENT
METHOD FOR PREPARING A POWDER BASED ON OXIDE(S) OF YTTRIUM, OF ALUMINIUM AND OPTIONALLY OF AT LEAST ONE OTHER ELEMENT

(30) Priorité: 23.10.2017 FR 1759996
(43) Date de publication de la demande: 08.07.2020
(73) Titulaire: Commissariat à l'Energie Atomique et aux Energies Alternatives, 75015 Paris (FR)
(72) Inventeur: DELAHAYE, Thibaud, 30330 Tresques (FR); LEBLANC, Martin, 34270 Sainte Croix De Quintillargues (FR); MIRA, Sarah, 30200 Orsan (FR)
(74) Mandataire: Brevalex
(86) Numéro de dépôt international: PCT/FR2018/052623
(87) Numéro de publication internationale: WO 2019/081842

(56) Documents cités:
- CN-A- 101 935 527
- MICHAEL K. CINIBULK: "Synthesis of Yttrium Aluminum Garnet from a Mixed-Metal Citrate Precursor", JOURNAL AMERICAN CERAMIC SOCIETY, vol. 83, no. 5, 1 mai 2000 (2000-05-01), pages 1276-1278, XP002781698, Air Force Research Laboratory, Ohio
- FUXUE YAN ET AL: "One-step synthesis of Ni0.5Zn0.5Fe2O4 fine-patterned films via photosensitive sol-gel route", CERAMICS INTERNATIONAL, 1 mars 2013 (2013-03-01), XP055065992, ISSN: 0272-8842, DOI: 10.1016/j.ceramint.2013.03.027
- YANG LIN ET AL: "A study on the effect factors of sol-gel synthesis of yttrium aluminum garnet nanopowders", JOURNAL OF APPLIED PHYSICS, AMERICAN INSTITUTE OF PHYSICS, US, vol. 107, no. 6, 18 mars 2010 (2010-03-18) , pages 64903-64903, XP012133774, ISSN: 0021-8979, DOI: 10.1063/1.3341012
- A. M. KUTYIN, E. Y. ROSTOKINA, E. M. GAVRISHCHUK, V. V. DROBOTENKO, A. D. PLEKHOVICH, P. A. YUNIN: "Kinetics and formation mechanism of yttrium aluminum garnet from an amorphous phase prepared by the sol-gel method", CERAMIC INTERNATIONAL / SCIENCE DIRECT, 5 mars 2015 (2015-03-05), pages 10616-10623, XP002781699, G. G. Devyatykh Institute of Chemistry, Nizhny Novgorod 603950, Russia
- MY H. NGUYEN, SANG-JIN LEE, WALTRAUD M. KRIVEN: "Sythesis of oxide powders by way of a polymeric steric entrapment precursor route", JOURNAL OF MATERIALS RESEARCH, vol. 14, no. 8, 29 mars 1999 (1999-03-29), pages 3417-3426, XP002781700, University of Illinois, Urbana, Illinois 61801
- V. TUCUREANU ET AL: "Synthesis and characterization of YAG:Ce phosphors for white Leds", OPTO-ELECTRONICS REVIEW, vol. 23, no. 4, 1 janvier 2015 (2015-01-01), pages 239-251, XP002781701, National Institute of Research, Bucharest, 079190 Romaniar ISSN: 1230-3402, DOI: 10.1515/oere-2015-0038

## Description

### DOMAINE TECHNIQUE

L'invention a trait à un procédé de préparation d'une poudre à base d'oxyde(s) d'yttrium, d'aluminium et éventuellement d'au moins un autre élément.

Ce procédé peut trouver, en particulier, son application dans la fabrication de céramiques transparentes utilisables notamment comme composants optiques.

### ETAT DE LA TECHNIQUE ANTÉRIEURE

Les céramiques transparentes et, plus spécifiquement, polycristallines sont généralement privilégiées par rapport aux monocristaux, notamment lorsqu'elles sont utilisées dans des cavités laser comme milieu amplificateur. En effet, de telles céramiques présentent de nombreux avantages, dont la possibilité de leur donner des formes complexes associées à des compositions chimiques variées.

Lorsque ces céramiques sont de composition chimique simple, ce qui est le cas de l'oxyde de type grenat répondant à la formule Y₃Al₅O₁₂ (connu également par l'acronyme YAG), elles sont généralement obtenues par mise en forme et frittage réactif d'un mélange de poudres d'yttrine (Y₂O₃) et d'alumine (Al₂O₃) dans les proportions stœchiométriques requises, tel que cela est décrit dans Journal of the European Ceramic Society, 20, 2000, p.2169-2174. Dans ce procédé, le frittage réactif a pour vocation à la fois de synthétiser la phase cristalline recherchée mais également de permettre une bonne liaison entre les grains initiaux de la poudre (ce qui correspond, en d'autres termes, à un phénomène de densification). Si ce type de procédé est envisageable pour la synthèse d'oxydes mixtes comportant uniquement deux cations (ce qui est le cas du composé YAG de formule Y₃Al₅O₁₂), il devient plus difficile à mettre en œuvre pour la fabrication de céramiques YAG substituées ou dopées comme, par exemple, les composés YAG dopées au chrome notées (YAG : Cr⁴⁺) (en d'autres termes, les composés YAG dont une partie de l'aluminium est substitué par du chrome) connues pour leurs propriétés d'absorbant saturable passif. En effet, dans ce cas, les teneurs en chrome contenues dans la phase YAG sont très faibles. Il est dès lors très compliqué d'obtenir une répartition homogène du chrome par un simple mélange des poudres d'yttrine, d'alumine et de d'oxyde de chrome comme cela est décrit dans J.Am.Soc. 79 (1996) 507-509. Qui plus est, il peut être nécessaire d'incorporer un élément supplémentaire dans la céramique et ce, afin de stabiliser le chrome au degré d'oxydation recherché (+IV), comme cela est le cas des céramiques transparentes de formules Y_{2,994}Ca_{0,006}Al_{4,995}Cr_{0,005}O₁₂ ou encore Y₃Al_{4,985}Mg_{0,01}Cr_{0,005}O₁₂, dans lesquelles le chrome (+IV) est stabilisé respectivement par du calcium (+II) et du magnésium (+II). Pour ces oxydes mixtes comportant plus de deux cations, dont certains sont en très faibles teneurs (comme ci-dessus, le chrome, le magnésium et le calcium), la mise en forme d'un mélange de poudres et l'utilisation d'un frittage réactif peut conduire à des hétérogénéités chimiques (par exemple, sous forme de gradients de composition non contrôlés et de ségrégation de phases) et microstructurales (par exemple, sous forme de porosités) qui sont autant de défauts rédhibitoires pour l'utilisation de ces céramiques comme composants optiques.

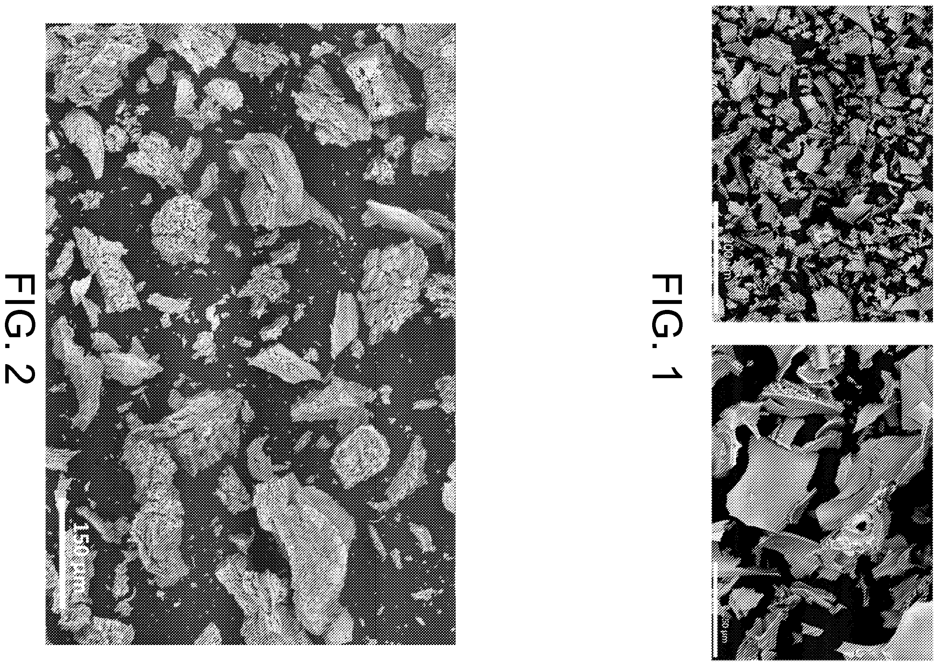

Au vu de la difficulté technique mentionnée ci-dessus pour élaborer ces oxydes mixtes, la recherche s'est essentiellement portée sur la synthèse de précurseurs YAG dopés présentant la composition chimique recherchée et non sur la mise en forme et/ou le frittage de ces précurseurs. Aussi, de nouvelles voies de synthèse permettant l'intégration d'un ou plusieurs cations au sein de la céramique YAG ont ainsi été développées. Ces méthodes qui existent sont nombreuses comme par exemple : la synthèse hydrothermale, comme décrite dans Journal of Materials Chemistry, 9, 1999, 2671-2674, la synthèse par hydrolyse par pulvérisation, comme décrite dans Journal of Alloy Compounds, 421, 2006, 298-302, la synthèse par co-précipitation, comme décrite dans Ceramics International 35 (2009), p. 2077-2081, la synthèse par combustion, comme décrite dans Journal of Luminescence, 122-123, 2007, 707-709, la synthèse par voie sol-gel polyacrylamide, comme décrite dans Trans. Noferrous. Met. Soc. China, 17, 2007, 1093-1099. La grande variété de ces méthodes montre l'intérêt pour ces matériaux mais aussi surtout la difficulté de synthèse d'un oxyde possédant les propriétés voulues adaptées aux étapes ultérieures de mise en forme et de densification. En effet, certaines de ces voies permettent l'obtention de l'oxyde recherché mais cependant avec une mise en forme qui s'ensuit difficile voire impossible. Parmi ces voies de synthèse, celles permettant d'obtenir ces oxydes mixtes complexes de manière monophasée découlent essentiellement de la polymérisation d'une solution cationique contenant en proportions stœchiométriques les éléments composant la phase recherchée, comme cela est décrit notamment dans American Chemical Society, 2003, 3747-3480. Si ces modes de synthèse permettent d'obtenir la phase recherchée, ils conduisent tous à la même morphologie de poudre se présentant sous forme d'agglomérats, qui ont une texture de cendres très aérées et volatiles, comme illustré par la figure 1 jointe en annexe représentant deux photographies obtenues par microscopie à balayage électronique avec électrons rétrodiffusés (à deux échelles différentes, 200 µm et 50 µm) de la poudre obtenue par voie polyacrylamide. Cette morphologie très poreuse est très complexe à mettre en forme par les voies classiquement utilisées pour les matériaux optiques. C'est le cas notamment de la compaction mais aussi des voies de mise en forme qui requièrent la réalisation de suspensions à partir de ces poudres comme, par exemple, le coulage en moule poreux et/ou sous vide et/ou sous pression.

Aussi, au vu de ce qui existe, les auteurs de la présente invention se sont fixé pour but de mettre au point un procédé de préparation d'une poudre à base d'oxyde(s) d'yttrium, d'aluminium et éventuellement d'au moins autre élément qui permette d'accéder aux avantages suivants :
- l'incorporation d'un autre élément notamment en de très faibles quantités sans que cela n'induise d'hétérogénéités chimiques ou structurales ; et
- l'obtention d'une poudre qui se prête à une mise en forme aisée sous forme d'objet compacté ou à la préparation d'une suspension ou d'une pâte destinée à la préparation d'un objet compacté.

### EXPOSÉ DE L'INVENTION

Ainsi, l'invention a trait à un procédé de préparation d'une poudre à base d'oxyde(s) d'yttrium, d'aluminium et éventuellement d'au moins un autre élément comprenant les étapes suivantes :
a) une étape d'ajout d'au moins un monomère et d'au moins un polymère de la famille des polyéthers à une solution comprenant de l'yttrium, de l'aluminium et éventuellement au moins un autre élément, l'yttrium, l'aluminium et éventuellement au moins l'autre élément étant sous forme cationique, le ou les monomères comprenant, avantageusement, au moins un groupe éthylénique et au moins un groupe polaire apte à former des liaisons hydrogène ;
b) une étape d'obtention d'un gel piégeant ladite solution par polymérisation du ou des monomères ajoutés en a) ;
c) une étape d'obtention d'un xérogel par déshydratation du gel obtenu en b);
d) une étape d'obtention de ladite poudre par traitement thermique du xérogel obtenu en c).

Avant d'entrer plus en détail dans la description de cette invention, nous précisons les définitions suivantes.

Par monomère, on entend, classiquement, dans ce qui précède et ce qui suit, un composé apte à réagir au cours d'une réaction de polymérisation pour former un polymère (qui sera, dans le cadre de cette invention, le matériau constitutif du gel, qui piège la solution), le polymère comprenant ainsi un motif répétitif, c'est-à-dire un groupe organique bivalent issu directement de la réaction du monomère.

Par polyéther, on entend, classiquement, dans ce qui précède et ce qui suit, un polymère qui comprend au moins un motif répétitif éther.

Par gel, on entend, classiquement, dans ce qui précède et ce qui suit, un matériau constitué du ou des polymères issu(s) de la polymérisation du ou des monomères susmentionnés, dans lequel est retenue une phase aqueuse, qui correspond, dans notre cas, à la solution comprenant l'yttrium, l'aluminium et éventuellement au moins un autre élément, sous forme cationique.

Par xérogel, on entend, classiquement dans ce qui précède et ce qui suit, un matériau constitué du ou des polymères issu(s) de la polymérisation du ou des monomères susmentionnés, dans lequel le ou les solvants de la solution ont été éliminés par séchage ne laissant ainsi subsister plus que de l'yttrium, de l'aluminium et éventuellement au moins un autre élément sous forme cationique.

Le procédé de l'invention comprend, en premier lieu, une étape d'ajout d'au moins un monomère et d'au moins un polymère de la famille des polyéthers à une solution comprenant de l'yttrium, de l'aluminium et éventuellement au moins un autre élément, l'yttrium, l'aluminium et au moins l'autre élément étant sous forme cationique.

Plus précisément, la solution comprenant de l'yttrium, de l'aluminium et éventuellement au moins un autre élément peut être une solution aqueuse comprenant de l'yttrium, de l'aluminium et ledit au moins un autre élément sous forme cationique.

L'yttrium, l'aluminium et ledit au moins un autre élément sous forme cationique peuvent être associés à des anions nitrates ou des anions carbonates.

Avant l'étape a), la solution comprenant de l'yttrium, de l'aluminium et éventuellement au moins un autre élément peut être préparée préalablement par dissolution dans une solution aqueuse d'au moins un précurseur d'yttrium, d'au moins un précurseur d'aluminium, éventuellement d'au moins un précurseur dudit ou desdits autres éléments, lorsque le ou lesdits autres éléments sont présents.

Ces précurseurs peuvent être des nitrates (par exemple, du nitrate d'yttrium Y(NO₃)₃, du nitrate d'aluminium Al(NO₃)₃)) ou des carbonates.

En fonction de la nature des précurseurs, la solution peut être acidifiée pour permettre leur dissolution de ceux-ci.

Lorsqu'ils sont présents, le ou les autres éléments peuvent être du chrome éventuellement associé avec du magnésium et/ou du calcium ; du cérium ; du néodyme ; du gadolinium ; de l'europium ; du terbium ; de l'holmium ; de l'ytterbium ; du samarium ; du dysprosium et/ou du rhénium.

Avantageusement, le ou les autres éléments sont du chrome éventuellement associé avec du magnésium et/ou du calcium, le magnésium et/ou le calcium servant à stabiliser le chrome au bon degré d'oxydation (à savoir, le degré d'oxydation (+IV)).

Avantageusement, le ou les monomères ajoutés au cours de l'étape a) comprennent au moins un groupe éthylénique (constituant le groupe de polymérisation) et au moins un groupe polaire apte à former des liaisons hydrogène. Ainsi, une fois polymérisé(s), le produit résultant (à savoir un polymère) sera apte à emmagasiner de l'eau par formation de liaisons hydrogène entre celle-ci et le ou les groupes polaires du ou des motifs répétitifs issus de la polymérisation du ou des monomères.

De manière plus spécifique, le ou les monomères ajoutés au cours de l'étape a), comprennent au moins un groupe éthylénique et au moins un groupe comportant un ou plusieurs atomes d'hydrogène liés à des atomes plus électronégatifs que l'hydrogène, tels que des atomes d'azote, des atomes d'oxygène, des atomes d'halogènes, tels que le fluor.

Encore plus spécifiquement, le ou les monomères comprennent au moins un groupe éthylénique et au moins un groupe choisi parmi les groupes amides, les groupes -OH, les groupes carboxyliques, les groupes carboxylates et/ou les groupes esters.

A titre d'exemples, le ou les monomères peuvent être choisis parmi les monomères acryliques, tels que l'acide acrylique, les monomères méthacryliques, les monomères acrylates (et plus particulièrement, les monomères acrylates d'alkyle), les monomères méthacrylates (et plus particulièrement, les monomères méthacrylates d'alkyle), les monomères acrylamides, les monomères *bis*(acrylamides), les monomères époxydes et les mélanges de ceux-ci.

Au cours de l'étape a), il peut être ajouté un seul monomère ou un mélange de monomères, par exemple, des types de ceux mentionnés ci-dessus.

Lorsqu'il s'agit d'un mélange de monomères, celui-ci peut consister, plus précisément en un monomère comprenant un seul groupe polymérisable, par exemple, un monomère acrylique, tel que l'acide acrylique ou un monomère acrylamide, tel que l'acrylamide et un monomère comprenant deux groupes polymérisables, par exemple un monomère *bis*(acrylamide), ce dernier du fait de la présence de deux groupes polymérisables assurant le rôle d'agent de réticulation. A titre indicatif, le mélange de monomères peut consister en :
- de l'acide acrylique et du N,N'-méthylène-*bis*(acrylamide) ; ou
- de l'acrylamide et du N,N'-méthylène-*bis*(acrylamide).

Hormis les caractéristiques mentionnées ci-dessus, qui peuvent dicter le choix du ou des monomères en fonction de la polymérisation souhaitée (par exemple, une polymérisation radicalaire ou une polymérisation par étapes comme la polycondensation), d'autres critères peuvent présider au choix du ou des monomères à ajouter lors de l'étape a) pour former ultérieurement un gel.

Parmi ces critères peuvent être mentionnés :
- les propriétés physico-chimiques du produit final recherché, à savoir la poudre, en termes, par exemple, de morphologie, de microstructure, de taux d'agglomération ;
- la viscosité souhaitée pour le gel issu de la polymérisation du ou des monomères, la notion de viscosité pouvant être un critère de choix en fonction de la nature du procédé mis en œuvre ; par exemple, un procédé continu faisant intervenir des filières d'écoulement s'accommode aisément avec une viscosité faible du gel obtenu ;
- le respect de la réglementation Reach concernant la toxicité du ou des monomères utilisés et l'absence de génération de gaz lors de la dégradation thermique des polymères issus de la polymérisation du ou des monomères ;
- l'aptitude des polymères issus de la polymérisation du ou des monomères à être dégradés thermiquement lors de l'étape de traitement thermique sans laisser d'impuretés résiduelles dans la poudre finale, dont les teneurs pourraient être rédhibitoires pour les traitements ultérieurs de la poudre sous forme d'objets compactés (notamment les étapes de mise en forme/frittage/densification) ;
- leur disponibilité et leur coût.

Dans certains cas, le ou les monomères ajoutés lors de l'étape a) peuvent également remplir le rôle d'agent complexant de l'yttrium, de l'aluminium et/ou éventuellement d'un autre élément présents dans la solution, sous réserve, bien entendu, que le ou les monomères comprennent des groupes aptes à complexer l'yttrium, l'aluminium et/ou éventuellement un autre élément.

Par ailleurs, il est ajouté à la solution au moins un polymère de la famille des polyéthers.

Le ou les polyéthers utilisés comportent, de par leur dénomination, au moins un motif répétitif éther, ce qui n'exclut pas qu'ils puissent contenir, en plus, d'autres types de motifs répétitifs comportant d'autres fonctions organiques que la fonction éther. En outre, il peut s'agir de polyéthers linéaires ou ramifiés.

En particulier, le ou les polyéthers peuvent comprendre au moins deux motifs répétitifs éthers distincts et, plus spécifiquement, peuvent appartenir à la famille des poloxamères.

Lorsque le ou les polyéthers utilisés dans l'étape a) correspondent à un ou des poloxamères, cela signifie qu'ils comprennent deux motifs répétitifs éthers distincts, que sont un motif répétitif oxyde d'éthylène et un motif répétitif oxyde de propylène. Encore plus spécifiquement, il peut s'agir d'un polymère tribloc comprenant un bloc central de polypropylèneglycol (dénommé également poly(oxyde de propylène)) et deux blocs périphériques de polyéthylèneglycol (dénommé également poly(oxyde d'éthylène), ce polymère tribloc pouvant être dénommé poly(oxyde d'éthylène-b-oxyde de propylène-b-oxyde d'éthylène). Des poloxamères utilisables dans le cadre de l'invention sont des poloxamères commercialisés sous la dénomination Pluronic® (par exemple, le Pluronic® P 123 et le Pluronic® L35).

Par ailleurs, il peut être ajouté à la solution, de préférence, avant l'ajout du ou des monomères, au moins un agent complexant de l'yttrium, de l'aluminium et/ou éventuellement d'un autre élément présents dans ladite solution, le ou lesdits agents complexant étant distincts du ou des monomères de l'étape a), le rôle de cet agent pouvant être, à part la complexation, d'éviter un phénomène de précipitation de l'yttrium, de l'aluminium et/ou éventuellement d'un autre élément avant la mise en œuvre de l'étape de gélification.

On précise que, par agent complexant, on entend un composé comprenant au moins un groupe fonctionnel apte à complexer l'yttrium, l'aluminium et/ou éventuellement un autre élément présents dans la solution, ce qui signifie, en d'autres termes, que l'yttrium, l'aluminium et/ou éventuellement un autre élément, au contact de cet agent, sont aptes à se lier au groupe fonctionnel susmentionné en formant une liaison de coordination moyennant le partage d'un doublet libre d'un hétéroatome présent au niveau de ce groupe et/ou d'une charge négative portée par un hétéroatome présent au niveau de ce groupe avec une orbitale vide de l'yttrium, de l'aluminium et/ou éventuellement d'un autre élément, lorsqu'il est présent.

Ledit hétéroatome porteur d'un doublet libre peut être un atome d'oxygène, un atome d'azote ou un atome de soufre et des combinaisons de ceux-ci, des groupes fonctionnels comprenant de tels hétéroatomes pouvant être un groupe alcool (à savoir, un groupe -OH), un groupe amine, un groupe éther, un groupe ester (à savoir, un groupe -COO-), un groupe sulfonyle (à savoir, un groupe -SO₂-), un groupe carboxyle, un groupe carboxylate et/ou un groupe phosphate.

A titre d'exemple d'agents complexants, il peut être cité :
- un composé comprenant au moins un groupe carboxylique, tel que l'acide citrique ;
- un composé comprenant au moins un groupe amine, tel que l'urée ;
- un composé comprenant au moins un groupe amine et au moins un groupe carboxylique, tel que l'EDTA (abréviation désignant le composé acide éthylènediaminetétraacétique) ou le DTPA (abréviation désignant le composé acide diéthylènetriaminepentaacétique).

Après l'ajout du ou des monomères, du ou des polyéthers et éventuellement du ou des agents complexants, le procédé de l'invention comprend une étape de gélification de la solution issue de l'étape a) par polymérisation du ou des monomères ajoutés lors de cette étape, moyennant quoi il se forme un gel piégeant la solution comprenant l'yttrium, l'aluminium et éventuellement un autre élément sous forme complexée ou non (selon que le ou les monomères comprennent au moins un groupe complexant ou qu'il a été procédé préalablement à l'ajout d'un agent complexant).

Pour engendrer la polymérisation du ou des monomères ajoutés en a), plusieurs voies peuvent être envisagées :
- une voie thermique consistant à chauffer la solution pour amorcer la polymérisation et, par voie de conséquence, la gélification (l'étape pouvant être ainsi qualifiée de thermo-gélification) ;
- une voie consistant à soumettre la solution à un rayonnement UV pour également amorcer la polymérisation ;
- une voie consistant à soumettre la solution à un rayonnement y pour également amorcer la polymérisation ;
- une voie consistant à ajouter à la solution un initiateur de polymérisation tel que, par exemple, de l'eau oxygénée ou un mélange eau oxygénée/acide ascorbique.

Il n'est pas exclu qu'une combinaison de ces différentes voies puisse être utilisée, telle que la voie thermique associée à la voie consistant à ajouter à la solution un initiateur de polymérisation.

Une fois le gel obtenu, il est soumis à une étape de déshydratation, par exemple, à une température comprise entre 30 et 300°C, moyennant quoi il se forme un xérogel (à savoir, un matériau poreux sec dont le squelette est formé des polymères formés à l'étape précédente) et, de manière concomitante, une précipitation des cations d'yttrium, d'aluminium et éventuellement d'au moins un autre élément (par exemple, sous forme de nitrates ou de carbonates) dans la matrice carbonée résultant de la déshydratation.

Cette étape de déshydratation peut être mise en œuvre en plaçant le gel dans une étuve ou encore dans un four à microondes.

Enfin, le xérogel est soumis à une étape de traitement thermique du xérogel obtenu en c) pour obtenir la poudre objet du procédé de l'invention.

Cette étape de traitement thermique peut consister en une opération de calcination sous atmosphère oxydante, au cours de laquelle le matériau organique du xérogel est dégradé thermiquement (l'opération pouvant être ainsi qualifiée en partie de déliantage) et les sels d'yttrium, d'aluminium et éventuellement d'un autre élément (par exemple, des nitrates) sont convertis en oxyde(s) d'aluminium, d'yttrium et éventuellement d'un autre élément. Les choix de la température et de la durée de calcination sont fixés en fonction de la nature du xérogel et des propriétés physico-chimiques souhaitées pour l'oxyde ou le mélange d'oxydes final. La température de calcination est typiquement comprise entre 400 et 1900°C et, plus particulièrement, entre 500 et 1200°C. Cette opération conduit principalement au relâchement gazeux de CO₂, CO et H₂O par dégradation thermique du matériau constitutif du xérogel mais en fonction de la nature de l'atmosphère de calcination, différents gaz en différentes quantités peuvent être générés. Quant aux sels, tels que des nitrates, ils sont convertis thermiquement en oxydes et en fonction de leur nature peuvent interagir pour former des solutions solides partielles ou totales.

L'étape de traitement thermique d) peut être précédée d'une étape de broyage du xérogel obtenu de sorte à le transformer en poudre, l'étape de traitement thermique se déroulant ainsi sur la poudre issue de l'étape de broyage.

Après l'opération de calcination sous atmosphère oxydante mentionnée ci-dessus, la poudre obtenue peut être soumise à une ou plusieurs opérations de traitement spécifiques pour adapter la poudre à l'étape ultérieure de mise en forme sous forme d'un objet compacté. Ce ou ces opérations de traitement spécifiques peuvent consister en une opération de broyage, de granulation, de désagglomération, de dispersion dans une solution aqueuse ou organique. Par exemple, pour une opération de désagglomération, la poudre peut être mise en suspension au moyen d'un broyeur tricylindre.

La poudre obtenue à l'issue du procédé de l'invention est une poudre à base d'oxyde(s) d'yttrium, d'aluminium et éventuellement d'au moins un autre élément et plus spécifiquement, il peut s'agir d'une poudre de Y₃Al₅O₁₂, l'yttrium pouvant être éventuellement substitué, en partie, par un autre élément tel que le calcium, le cérium, le gadolinium, le néodyme, l'europium, le terbium, le rhénium, l'holmium, l'ytterbium, le samarium et/ou le dysprosium et l'aluminium pouvant être éventuellement substitué, en partie, par un autre élément, tel que le chrome et le magnésium. Plus spécifiquement, il peut s'agir d'une poudre de Y₃Al₅O₁₂, l'yttrium étant substitué, en partie, par du calcium et l'aluminium étant substitué, en partie par du chrome, le calcium servant à stabiliser le chrome au bon degré d'oxydation (à savoir, le degré d'oxydation (+IV)), un exemple de ce type étant Y_{2,994}Ca_{0,006}Al_{4,995}Cr_{0,005}O₁₂.

La poudre obtenue à l'issue du procédé de l'invention peut être une poudre de Y₃Al₅O₁₂ avec l'aluminium pouvant être substitué, en partie, par du chrome et du magnésium, le magnésium servant à stabiliser le chrome au bon degré d'oxydation (à savoir, le degré d'oxydation (+IV)), un exemple de ce type étant Y₃Al_{4,985}Mg_{0,01}Cr_{0,005}O₁₂.

La poudre obtenue conformément au procédé de l'invention est une composition très active, particulièrement adaptée à l'obtention d'un objet compacté utilisable, par exemple, dans le domaine optique.

Ainsi l'invention a trait également à un procédé de préparation d'un objet compacté, par exemple sous forme de pastilles, comprenant :
e) une étape de mise en œuvre du procédé de préparation tel que défini ci-dessus ;
f) une étape de compactage de ladite poudre obtenue en e).

Ainsi, la poudre obtenue selon le procédé de l'invention peut être utilisée telle quelle mais il n'est pas exclu, qu'avant l'étape de compactage, elle soit amenée à subir des opérations de traitement préalables, telles qu'une opération de broyage, de granulation, d'atomisation comme spécifiées ci-dessus.

L'étape de compactage peut être réalisée au moyen d'une presse, qui va appliquer une pression à la composition placée dans un moule, dont la forme correspond à la forme que l'on souhaite affecter à l'objet compacté.

La poudre obtenue conformément au procédé de l'invention peut être également adaptée à la préparation d'une suspension ou d'une pâte utilisable, quant à elle, pour la préparation d'un objet compacté.

L'invention a donc également trait à un procédé de préparation d'un objet compacté comprenant :
g) une étape de mise en œuvre du procédé de préparation tel que défini ci-dessus ;
h) une étape de formation d'une suspension ou d'une pâte à partir de la poudre obtenue en g) ;
i) une étape de formation de l'objet compacté à partir de la suspension ou de la pâte préparée en h).

L'étape de formation de la suspension ou de la pâte peut être réalisée par mise en contact de la poudre avec un solvant aqueux ou organique en présence ou non d'additifs (tels que des liants, des plastifiants, des dispersants, des lubrifiants, des agents mouillants, des agents anti-mousse).

L'étape de formation de l'objet compacté à partir de la suspension ou de la pâte peut être mise en œuvre par différentes techniques, telles que le coulage en moule poreux, le coulage sous vide ou sous pression, le coulage-gélification, l'extrusion ou l'injection.

D'autres caractéristiques et avantages de l'invention apparaîtront du complément de description qui suit qui se rapporte à des exemples de préparation de poudres conformes à l'invention.

Bien entendu, ce complément de description n'est donné qu'à titre d'illustration de l'invention et n'en constitue en aucun cas une limitation.

### BREVE DESCRIPTION DES FIGURES

La figure 1 représente deux photographies obtenues par microscopie à balayage électronique avec électrons rétrodiffusés (à deux échelles différentes, 200 µm et 50 µm) d'une poudre obtenue par voie polyacrylamide conformément à un procédé de l'art antérieur.
Les figures 2 et 3 représentent deux photographies obtenues par microscopie à balayage électronique avec électrons rétrodiffusés de poudres obtenues à l'exemple 1.
La figure 4 représente une photographie obtenue par microscopie à balayage électronique avec électrons rétrodiffusés d'une poudre obtenue à l'exemple 2.
La figure 5 représente une photographie obtenue par microscopie à balayage électronique avec électrons rétrodiffusés d'une poudre obtenue à l'exemple 3.
La figure 6 représente une photographie obtenue par microscopie à balayage électronique avec électrons rétrodiffusés du produit obtenu à l'exemple comparatif 1.

### EXPOSÉ DÉTAILLÉ DE MODES DE RÉALISATION PARTICULIERS

### EXEMPLE 1

Dans cet exemple, il est préparé une poudre de formule Y₃Al_{4,985}Mg_{0,01}Cr_{0,005}O₁₂.

Pour ce faire, dans un premier temps, il est ajouté à une solution de 70 mL d'eau ultra pure dans l'ordre 30 mL de Pluronic® P123, 8,4916 g d'acide citrique monohydraté, 5,2581 g de nitrate d'yttrium tétrahydraté (Y(NO₃)₃.4H₂O), 9,4457 g de nitrate d'aluminium nonahydraté (Al(NO₃)₃.9H₂O), 7,5 mg de nitrate de magnésium (Mg(NO₃)₃) et 10,1 mg de nitrate de chrome nonahydraté (Cr(NO₃)₃.9H₂O). Le mélange est maintenu sous agitation jusqu'à ce que la solution soit limpide et les solides totalement dissous. Dans un deuxième temps, à une solution de 30 mL d'acide acrylique sont ajoutés 3,0001 g de N, N'-méthylene-*bis*(acrylamide) sous agitation jusqu'à ce que la solution résultante soit limpide. Ces deux solutions sont ensuite chauffées jusqu'à 60°C. La solution comprenant de l'acide acrylique est ajoutée à la solution aqueuse contenant les cations. Une fois la solution ajoutée, la température est augmentée jusqu'à 100°C. Lorsque cette valeur est atteinte, la solution prend en masse et gélifie instantanément. Le gel est ensuite placé dans une étuve à 150°C pendant 20 heures afin d'être déshydraté. Une fois son passage à l'étuve terminé, un xérogel est obtenu. Le xérogel est broyé avant d'être passé au four à 500°C pendant 8 heures puis à 900°C pendant 2 heures. A la sortie du four d'après le diagramme de diffraction des rayons X, une poudre monophasée de Y₃Al_{4,985}Mg_{0,01}Cr_{0,005}O₁₂ est obtenue. La morphologie de cette poudre se présente sous forme d'agglomérats, comme illustrés par la figure 2 représentant une photographie prise par microscopie à balayage électronique avec électrons rétrodiffusés, ce qui la différencie de celle habituellement obtenue (agglomérats 2D) lors de ce type de synthèse sans additif Pluronic.

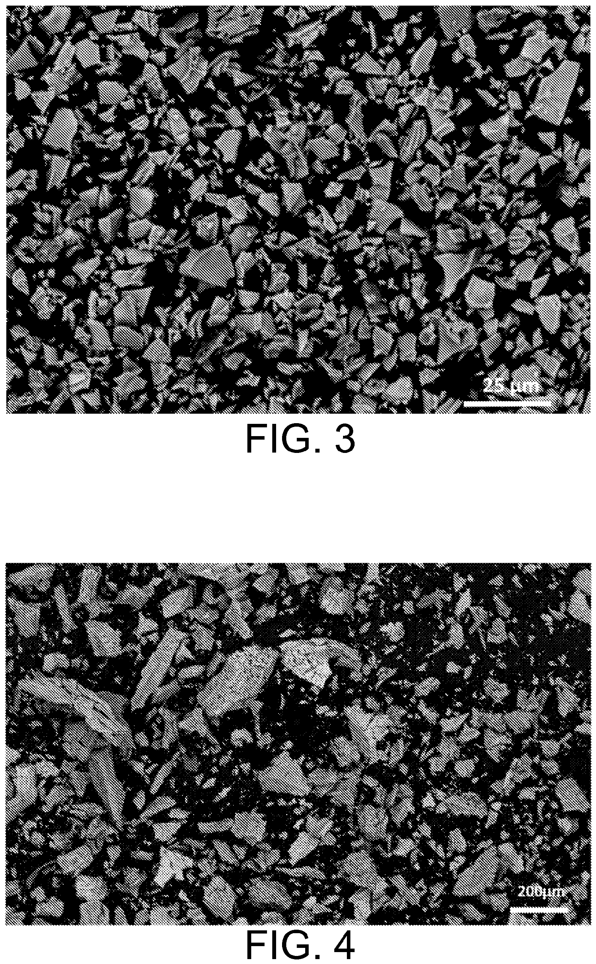

La poudre obtenue est ensuite mise en suspension en présence de poléthylèneglycol (PEG) et le mélange formé est passé au broyeur tricylindre. Après broyage / desagglomération, le système poudre + PEG est traité thermiquement sous air à 600°C pour éliminer le PEG. On obtient alors une poudre 3D à granulométrie monodisperse, comme illustré par la figure 3 illustrant une photographie prise par microscopie à balayage électronique avec électrons rétrodiffusés.

### EXEMPLE 2

Dans cet exemple, il est préparé une poudre de formule Y_{2,994}Ca_{0,006}Al_{4,995}Cr_{0,005}O₁₂.

Pour ce faire, dans un premier temps, il est ajouté, à une solution de 70 mL d'eau ultra pure dans l'ordre 30 mL de Pluronic® L35, 8,4914 g d'acide citrique monohydraté, 5,2474 g de nitrate d'yttrium tétrahydraté (Y(NO₃)₃.4H₂O), 9,4629 g de nitrate d'aluminium nonahydraté (Al(NO₃)₃.9H₂O), 7,1 mg de nitrate de calcium tétrahydraté (Ca(NO₃)₃.4H₂O) et 10,2 mg de nitrate de chrome nonahydraté (Cr(NO₃)₃.9H₂O). Le mélange obtenu est maintenu sous agitation jusqu'à ce que la solution soit limpide et les solides totalement dissous. Dans un deuxième temps, à une solution de 30 mL d'acide acrylique sont ajoutés 3,0001 g de N, N'-méthylene-*bis*(acrylamide) sous agitation jusqu'à ce que la solution résultante soit limpide. Ces deux solutions sont ensuite chauffées jusqu'à 60°C. La solution comprenant de l'acide acrylique est ajoutée à la solution aqueuse contenant les cations. Une fois la solution ajoutée, la température est augmentée jusqu'à 100°C. Lorsque cette valeur est atteinte, la solution prend en masse et gélifie instantanément. Le gel est ensuite placé dans une étuve à 150°C pendant 20 heures afin d'être déshydraté. Une fois son passage à l'étuve terminé un xérogel est obtenu.

Le xérogel est broyé avant d'être passé au four à 500°C pendant 8 heures puis à 900°C pendant 2 heures. A la sortie du four d'après le diagramme de diffraction des rayons X, une poudre monophasée de Y_{2,994}Ca_{0,006}Al_{4,995}Cr_{0,005}O₁₂ est obtenue. La morphologie de cette poudre se présente sous forme d'agglomérats 3D, comme illustré par la figure 4 illustrant une photographie prise par microscopie à balayage électronique avec électrons rétrodiffusés.

### EXEMPLE 3

Dans cet exemple, il est préparé une poudre de formule Y_{2,994}Ca_{0,006}Al_{4,995}Cr_{0,005}O₁₂.

Pour ce faire, dans un premier temps, il est ajouté, à une solution de 70 mL d'eau ultra pure dans l'ordre 30 mL de Pluronic® P123, 8,4914 g d'acide citrique monohydraté, 5,2474 g de nitrate d'yttrium tétrahydraté (Y(NO₃)₃.4H₂O), 9,4629 g de nitrate d'aluminium nonahydraté (Al(NO₃)₃.9H₂O), 7,1 mg de nitrate de calcium tétrahydraté (Ca(NO₃)₃.4H₂O) et 10,2 mg de nitrate de chrome nonahydraté (Cr(NO₃)₃.9H₂O). Le mélange obtenu est maintenu sous agitation jusqu'à ce que la solution soit limpide et les solides totalement dissous. Dans un deuxième temps, à une solution aqueuse de 30 mL portée à 50°C sont ajoutés 21 g d'acrylamide puis 2,1 g de N, N'-méthylene-*bis*(acrylamide). Cette solution est maintenue sous agitation jusqu'à être limpide.

La solution comprenant de l'acrylamide est ajoutée à la solution aqueuse contenant les cations. Une fois la solution ajoutée, la température est augmentée jusqu'à 100°C. Lorsque cette valeur est atteinte, une solution de tétraéthylènediamine et d'eau oxygénée est ajoutée pour initier la réaction. La solution prend en masse et gélifie instantanément. Le gel obtenu est mis au repos jusqu'à atteindre la température ambiante. Puis il est placé dans une étuve à 150°C pendant 20 heures afin d'être déshydraté. Une fois son passage à l'étuve terminé un xérogel est obtenu.

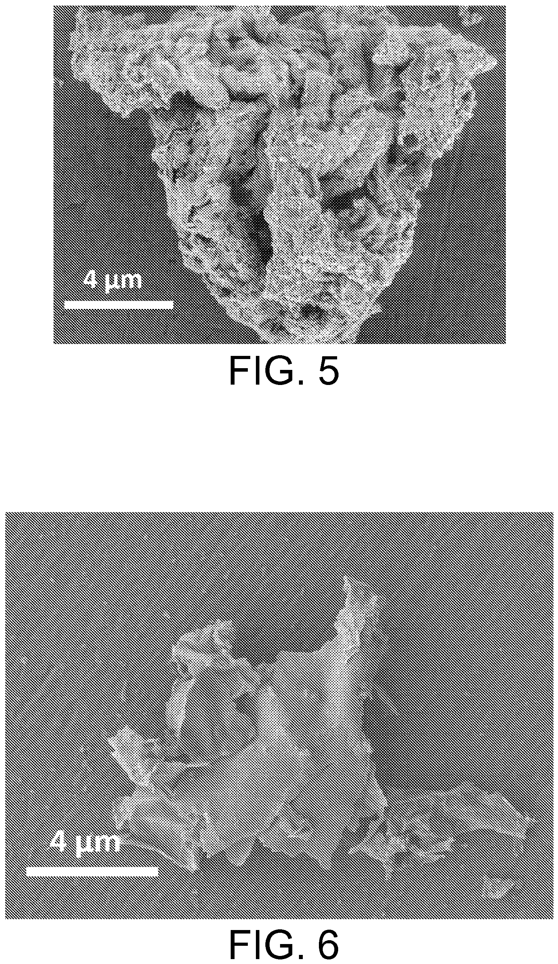

Le xérogel est broyé avant d'être passé au four à 500°C pendant 8 heures puis à 900°C pendant 2 heures. A la sortie du four d'après le diagramme de diffraction des rayons X, une poudre de Y_{2,994}Ca_{0,006}Al_{4,995}Cr_{0,005}O₁₂ est obtenue. La morphologie de cette poudre se présente sous forme d'agglomérats 3D, comme illustré par la figure 5 illustrant une photographie prise par microscopie à balayage électronique avec électrons rétrodiffusés.

### EXEMPLE COMPARATIF 1

Cet exemple est réalisé dans des conditions similaires à celles de l'exemple 3 ci-dessus, si ce n'est qu'il n'a pas été ajouté de Pluronic® P 123.

Plus spécifiquement, dans un premier temps, il est ajouté, à une solution de 70 mL d'eau ultra pure dans l'ordre 8,4914 g d'acide citrique monohydraté, 5,2474 g de nitrate d'yttrium tétrahydraté (Y(NO₃)₃.4H₂O), 9,4629 g de nitrate d'aluminium nonahydraté (Al(NO₃)₃.9H₂O), 7,1 mg de nitrate de calcium tétrahydraté (Ca(NO₃)₃.4H₂O) et 10,2 mg de nitrate de chrome nonahydraté (Cr(NO₃)₃.9H₂O). Le mélange obtenu est maintenu sous agitation jusqu'à ce que la solution soit limpide et les solides totalement dissous. Dans un deuxième temps, à une solution aqueuse de 30 mL portée à 50°C sont ajoutés 21 g d'acrylamide puis 2,1 g de N, N'-méthylene-*bis*(acrylamide). Cette solution est maintenue sous agitation jusqu'à être limpide.

La solution comprenant de l'acrylamide est ajoutée à la solution aqueuse contenant les cations. Une fois la solution ajoutée, la température est augmentée jusqu'à 100°C. Lorsque cette valeur est atteinte, une solution de tétraéthylènediamine et d'eau oxygénée est ajoutée pour initier la réaction. La solution prend en masse et gélifie instantanément. Le gel obtenu est mis au repos jusqu'à atteindre la température ambiante. Puis il est placé dans une étuve à 150°C pendant 20 heures afin d'être déshydraté. Une fois son passage à l'étuve terminé un xérogel est obtenu.

Le xérogel est broyé avant d'être passé au four à 500°C pendant 8 heures puis à 900°C pendant 2 heures. A la sortie du four d'après le diagramme de diffraction des rayons X, une poudre de Y_{2,994}Ca_{0,006}Al_{4,995}Cr_{0,005}O₁₂ est obtenue. La morphologie de cette poudre se présente sous forme de feuillets, comme illustré par la figure 6 illustrant une photographie prise par microscopie à balayage électronique avec électrons rétrodiffusés. Ces feuillets peuvent être difficiles à mettre en forme sans traitement spécifique.

Il peut en être déduit que l'ajout du Pluronic® P123 permet d'améliorer la morphologie des poudres obtenues en les rendant compatibles pour une mise en forme sans traitement spécifique.

## Revendications

1. Procédé de préparation d'une poudre à base d'oxyde(s) d'yttrium, d'aluminium et éventuellement d'au moins un autre élément comprenant les étapes suivantes :
a) une étape d'ajout d'au moins un monomère et d'au moins un polymère de la famille des polyéthers à une solution comprenant de l'yttrium, de l'aluminium et éventuellement au moins un autre élément, l'yttrium, l'aluminium et éventuellement au moins l'autre élément étant sous forme cationique, le ou les monomères comprenant au moins un groupe éthylénique et au moins un groupe polaire apte à former des liaisons hydrogène ;
b) une étape d'obtention d'un gel piégeant ladite solution par polymérisation du ou des monomères ajoutés en a) ;
c) une étape d'obtention d'un xérogel par déshydratation du gel obtenu en b) ;
d) une étape d'obtention de ladite poudre par traitement thermique du xérogel obtenu en c).

2. Procédé selon la revendication 1, dans lequel, dans la solution de l'étape a), l'yttrium, de l'aluminium et ledit au moins un autre élément sous forme cationique sont associés à des anions nitrates ou des anions carbonates.

3. Procédé selon l'une quelconque des revendications précédentes, dans lequel le ou les autres éléments sont du chrome éventuellement associé avec du magnésium et/ou du calcium ; du cérium ; du néodyme ; du gadolinium ; de l'europium ; du terbium ; de l'holmium ; de l'ytterbium ; du samarium ; du dysprosium et/ou du rhénium.

4. Procédé selon l'une quelconque des revendications précédentes, dans lequel le ou les monomères ajoutés au cours de l'étape a), comprennent au moins un groupe éthylénique et au moins un groupe comportant un ou plusieurs atomes d'hydrogène liés à des atomes plus électronégatifs que l'hydrogène, tels que des atomes d'azote, des atomes d'oxygène, des atomes d'halogènes.

5. Procédé selon l'une quelconque des revendications précédentes, dans lequel le ou les monomères comprennent au moins un groupe éthylénique et au moins un groupe choisi parmi les groupes amides, les groupes -OH, les groupes carboxyliques, les groupes carboxylates et/ou les groupes esters.

6. Procédé selon l'une quelconque des revendications précédentes, dans lequel l'ajout de l'étape a) consiste en un ajout d'un mélange de monomères.

7. Procédé selon la revendication 6, dans lequel le mélange de monomères consiste en un monomère comprenant un seul groupe polymérisable et un monomère comprenant deux groupes polymérisables.

8. Procédé selon l'une quelconque des revendications précédentes, dans lequel le ou les polyéthers comprennent au moins deux motifs répétitifs éthers distincts.

9. Procédé selon l'une quelconque des revendications précédentes, dans lequel il est ajouté à la solution de l'étape a) au moins un agent complexant de l'yttrium, de l'aluminium et/ou éventuellement d'au moins un autre élément présents dans ladite solution, le ou lesdits agents complexants étant distincts du ou des monomères de l'étape a).

10. Procédé selon la revendication 9, dans lequel le ou les agents complexants sont choisis parmi les composés comprenant au moins un groupe carboxylique, les composés comprenant au moins un groupe amine, les composés comprenant au moins un groupe amine et au moins un groupe carboxylique.

11. Procédé selon l'une quelconque des revendications précédentes, dans lequel la polymérisation de l'étape b) est engendrée par les voies suivantes :
- une voie thermique consistant à chauffer la solution pour amorcer la polymérisation et, par voie de conséquence, la gélification ;
- une voie consistant à soumettre la solution à un rayonnement UV pour également amorcer la polymérisation ;
- une voie consistant à soumettre la solution à un rayonnement y pour également amorcer la polymérisation ;
- une voie consistant à ajouter à la solution un initiateur de polymérisation tel que, par exemple, de l'eau oxygénée ou un mélange eau oxygénée/acide ascorbique ; et
- des combinaisons de ces voies.

12. Procédé selon l'une quelconque des revendications précédentes, dans lequel l'étape de traitement thermique consiste en une opération de calcination sous atmosphère oxydante.

13. Procédé selon l'une quelconque des revendications précédentes, dans lequel l'étape de traitement thermique d) est précédée d'une étape de broyage du xérogel obtenu de sorte à le transformer en poudre.

14. Procédé de préparation d'un objet compacté comprenant :
e) une étape de mise en œuvre du procédé de préparation tel que défini selon l'une quelconque des revendications 1 à 13;
f) une étape de compactage de ladite poudre obtenue en e).

15. Procédé de préparation d'un objet compacté comprenant :
g) une étape de mise en œuvre du procédé de préparation tel que défini selon l'une quelconque des revendications 1 à 13;
h) une étape de formation d'une suspension ou d'une pâte à partir de la poudre obtenue en g) ;
i) une étape de formation de l'objet compacté à partir de la suspension ou de la pâte préparée en h).

## Patentansprüche

1. Verfahren zur Herstellung eines Pulvers auf Basis von Oxid(en) von Yttrium, von Aluminium und gegebenenfalls von wenigstens einem anderen Element, umfassend die folgenden Schritte:
a) einen Schritt des Hinzufügens wenigstens eines Monomers und wenigstens eines Polymers aus der Familie der Polyether zu einer Lösung, die das Yttrium, das Aluminium und gegebenenfalls wenigstens ein anderes Element umfasst, wobei das Yttrium, das Aluminium und gegebenenfalls das wenigstens eine andere Element in kationischer Form sind, wobei das oder die Monomere wenigstens eine Ethylengruppe und wenigstens eine polare Gruppe mit einer Eignung zum Bilden von Wasserstoffbindungen umfasst/umfassen;
b) einen Schritt des Erhaltens eines Gels, das die Lösung durch Polymerisation des oder der in a) hinzugefügten Monomere einfängt;
c) einen Schritt des Erhaltens eines Xerogels durch Dehydratation des in b) erhaltenen Gels;
d) einen Schritt des Erhaltens des Pulvers durch thermische Behandlung des in c) erhaltenen Xerogels.

2. Verfahren nach Anspruch 1, bei dem in der Lösung des Schritts a) das Yttrium, das Aluminium und das wenigstens eine andere Element in kationischer Form zu Nitratanionen oder Carbonatanionen assoziiert sind.

3. Verfahren nach einem der vorhergehenden Ansprüche, bei dem das oder die anderen Elemente Chrom sind, gegebenenfalls assoziiert mit Magnesium und/oder Kalzium; Cer; Neodym; Gadolinium; Europium; Terbium, Holmium; Ytterbium; Samarium; Dysprosium und/oder Rhenium.

4. Verfahren nach einem der vorhergehenden Ansprüche, bei dem das oder die im Verlauf des Schritts a) hinzugefügten Monomere wenigstens eine Ethylengruppe und wenigstens eine Gruppe umfassen, die ein oder mehrere Wasserstoffatome umfasst, gebunden an Atome, die stärker elektronegativ sind als der Wasserstoff, beispielsweise Stickstoffatome, Sauerstoffatome, Halogenatome.

5. Verfahren nach einem der vorhergehenden Ansprüche, bei dem das oder die Monomere wenigstens eine Ethylengruppe und wenigstens eine Gruppe umfassen, ausgewählt aus den Amidgruppen, den -OH-Gruppen, den Carboxylgruppen, den Carboxylatgruppen und/oder den Estergruppen.

6. Verfahren nach einem der vorhergehenden Ansprüche, bei dem das Hinzufügen des Schritts a) aus einem Hinzufügen einer Mischung von Monomeren besteht.

7. Verfahren nach Anspruch 6, bei dem die Mischung von Monomeren aus einem Monomer, das eine einzige polymerisierbare Gruppe umfasst, und einem Monomer besteht, das zwei polymerisierbare Gruppen umfasst.

8. Verfahren nach einem der vorhergehenden Ansprüche, bei dem das oder die Polyether wenigstens zwei sich wiederholende unterschiedliche Ethermotive umfassen.

9. Verfahren nach einem der vorhergehenden Ansprüche, bei dem zu der Lösung des Schritts a) wenigstens ein Agens zur Komplexierung des Yttriums, des Aluminiums und/oder gegebenenfalls wenigstens eines anderen Elements hinzugefügt wird, die in der Lösung vorhanden sind, wobei das oder die komplexierenden Agenzien von dem oder den Monomeren des Schritts a) verschieden sind.

10. Verfahren nach Anspruch 9, bei dem das oder die komplexierenden Agenzien ausgewählt sind aus den Verbindungen, die wenigstens eine Carboxylgruppe umfassen, den Verbindungen, die wenigstens eine Amingruppe umfassen, den Verbindungen, die wenigstens eine Amingruppe und wenigstens eine Carboxylgruppe umfassen.

11. Verfahren nach einem der vorhergehenden Ansprüche, bei dem die Polymerisation des Schritts b) auf den folgenden Wegen bewirkt wird:
- einem thermischen Weg, der darin besteht, die Lösung zu erhitzen, um die Polymerisation und als Folge davon die Gelbildung in Gang zu setzen;
- einen Weg, der darin besteht, die Lösung einer UV-Strahlung auszusetzen, um ebenfalls die Polymerisation in Gang zu setzen;
- einen Weg, der darin besteht, die Lösung einer γ-Strahlung auszusetzen, um ebenfalls die Polymerisation in Gang zu setzen;
- einen Weg, der darin besteht, zu der Lösung einen Polymerisationsinitiator hinzuzufügen, beispielsweise oxygeniertes Wasser oder eine Mischung oxygeniertes Wasser/Ascorbinsäure; und
- Kombinationen dieser Wege.

12. Verfahren nach einem der vorhergehenden Ansprüche, bei dem der Schritt der thermischen Behandlung aus einer Kalzinierungsoperation unter oxidierender Atmosphäre besteht.

13. Verfahren nach einem der vorhergehenden Ansprüche, bei dem dem Schritt der thermischen Behandlung d) ein Schritt der Zerkleinerung des erhaltenen Xerogels derart vorhergeht, dass es in Pulver umgewandelt wird.

14. Verfahren zur Herstellung eines kompaktierten Objekts, umfassend:
e) einen Schritt der Durchführung des Herstellungsverfahrens wie in einem der Ansprüche 1 bis 13 definiert;
f) einen Schritt der Kompaktierung des in e) erhaltenen Pulvers.

15. Verfahren zur Herstellung eines kompaktierten Objekts, umfassend:
g) einen Schritt der Durchführung des Herstellungsverfahrens wie in einem der Ansprüche 1 bis 13 definiert;
h) einen Schritt der Bildung einer Suspension oder einer Paste ausgehend von dem in g) erhaltenen Pulver;
i) einen Schritt der Bildung des kompaktierten Objekts ausgehend von der in h) hergestellten Suspension oder Paste.

## Claims

1. Method for preparing a powder based on oxide(s) of yttrium, of aluminium and optionally of at least one other element comprising the following steps:
a) a step of adding at least one monomer and at least one polymer from the polyether family to a solution comprising the yttrium, the aluminium and optionally at least one other element, the yttrium, the aluminium and optionally at least the other element being in cationic form, the monomer(s) comprising at least one ethylenic group and at least one polar group capable of forming hydrogen bonds;
b) a step of obtaining a gel trapping said solution by polymerisation of the monomer(s) added in a);
c) a step of obtaining a xerogel by dehydration of the gel obtained in b);
d) a step of obtaining said powder by heat treatment of the xerogel obtained in c).

2. Method according to claim 1, wherein, in the solution of step a), the yttrium, the aluminium and said at least one other element in cationic form are associated with nitrate anions or carbonate anions.

3. Method according to any preceding claim, wherein the other element(s) are chromium optionally associated with magnesium and/or calcium; cerium; neodymium; gadolinium; europium; terbium; holmium; ytterbium; samarium; dysprosium and/or rhenium.

4. Method according to any preceding claim, wherein the monomer(s) added during step a), comprise at least one ethylenic group and at least one group including one or more hydrogen atoms bonded to atoms that are more electronegative than hydrogen, such as nitrogen atoms, oxygen atoms, halogen atoms.

5. Method according to any preceding claim, wherein the monomer(s) comprise at least one ethylenic group and at least one group chosen from amide groups, -OH groups, carboxylic groups, carboxylate groups and/or ester groups.

6. Method according to any preceding claim, wherein the adding of step a) consists in adding a mixture of monomers.

7. Method according to claim 8, wherein the mixture of monomers consists of a monomer comprising a single polymerisable group and a monomer comprising two polymerisable groups.

8. Method according to any preceding claim, wherein the polyether(s) comprise at least two distinct ether repeating units.

9. Method according to any preceding claim, wherein to the solution of step a) is added at least one complexing agent of yttrium, of aluminium and/or optionally of at least one other element present in said solution, said complexing agent(s) being distinct from the monomer(s) of step a).

10. Method according to claim 9, wherein the complexing agent(s) are chosen from compounds comprising at least one carboxylic group, compounds comprising at least one amine group, compounds comprising at least one amine group and at least one carboxylic group.

11. Method according to any preceding claim, wherein the polymerisation of step b) is initiated by the following routes:
- a thermal route consisting in heating the solution in order to initiate the polymerisation and, consequently, the gelling;
- a route consisting in subjecting the solution to UV radiation also in order to initiate the polymerisation;
- a route consisting in subjecting the solution to a y radiation also in order to initiate the polymerisation;
- a route consisting in adding a polymerisation initiator to the solution such as, for example, oxygenated water or an oxygenated water/ascorbic acid mixture; and
- combinations of these routes.

12. Method according to any preceding claim, wherein the step of thermal treatment consists in a calcination operation under an oxidising atmosphere.

13. Method according to any preceding claim, wherein the step of thermal treatment d) is preceded by a step of grinding the xerogel obtained in such a way as to transform it into a powder.

14. Method for preparing a compacted object comprising:
e) a step of implementing the method for preparing as defined according to any of claims 1 to 13;
f) a step of compacting said powder obtained in e).

15. Method for preparing a compacted object comprising:
g) a step of implementing the method for preparing as defined according to any of claims 1 to 13;
h) a step of forming a suspension or a paste from the powder obtained in g);
i) a step of forming the compacted object from the suspension or the paste prepared in h).
